# EUROPEAN PATENT APPLICATION

(11) **EP 4 779 995 A1**
(43) Date of publication of application: **22.07.2026**
(21) Application number: 24864713.3
(22) Date of filing: 12.09.2024
(51) Int. Cl.: H04N 21/431, H04N 21/4784, H04N 21/4788, H04N 21/2187

(54) **LIVE BROADCAST INTERACTION METHOD AND APPARATUS, DEVICE, AND STORAGE MEDIUM**

(30) Priority: 14.09.2023 CN 202311190569
(71) Applicant: Beijing Zitiao Network Technology Co., Ltd., Beijing 100190 (CN)
(72) Inventor: CHEN, Wei, Beijing 100028 (CN); FU, Rong, Beijing 100028 (CN); LI, Yijie, Beijing 100028 (CN)
(74) Representative: Grünecker Patent- und Rechtsanwälte PartG mbB
(86) International application number: PCT/CN2024/118619
(87) International publication number: WO 2025/055999

(57) **Abstract**

Embodiments of the disclosure relate to a method, an apparatus, a device, and a storage medium for live streaming interaction. The method includes: displaying, in response to a live streaming interaction event associated with a plurality of live streaming rooms, a plurality of display areas corresponding to the plurality of live streaming rooms in a live streaming interface; displaying a plurality of interaction components corresponding to the plurality of live streaming rooms in association with the plurality of display areas, where an interaction component at least indicates interaction information of a corresponding live streaming room; and controlling that an update of interaction information indicated by a first group of interaction components is ceased at a first moment of the live streaming interaction event, where the first group of interaction components correspond to a first group of live streaming rooms in the live streaming rooms, the first group of live streaming rooms are determined based on the interaction information of the plurality of live streaming rooms at the first moment, and a number of the first group of live streaming rooms is less than a number of the plurality of live streaming rooms. In this way, the embodiments of the disclosure can adjust a display style of the interaction component based on an interaction condition in the live streaming room to enhance the interaction atmosphere and improve the interaction experience.

## Description

This application claims priority to Chinese Patent Application No. 202311190569.4, filed on September 14, 2023, and entitled "Method, Apparatus, Device, and Storage Medium for Live Streaming Interaction", the entire content of which is incorporated herein by reference.

### FIELD

Example embodiments of the present disclosure generally relate to the field of computers, and in particular, to a method, an apparatus, a device, and a computer-readable storage medium for live streaming interaction.

### BACKGROUND

With the development of computer technologies, a live streaming technology that allows people to perform online interaction by using the Internet and a streaming media technology is rapidly developed and gradually becomes a mainstream interaction manner since the live streaming technology integrates rich elements such as images, texts and sounds.

In the form of live streaming, a strong sense of presence may be created through real, vivid and instant content presentation, and an impressive and lasting interaction effect is achieved. In addition, the live streaming may allow users to interact with other users in real time. Therefore, how to provide a better interaction experience for users has become a focal point of attention.

### SUMMARY

In a first aspect of the present disclosure, a method for live streaming interaction is provided. The method includes: displaying, in response to a live streaming interaction event associated with a plurality of live streaming rooms, a plurality of display areas corresponding to the plurality of live streaming rooms in a live streaming interface; displaying a plurality of interaction components corresponding to the plurality of live streaming rooms in association with the plurality of display areas, where an interaction component at least indicates interaction information of a corresponding live streaming room, and the interaction information is determined based on an interaction operation associated with the corresponding live streaming room; and controlling that an update of interaction information indicated by a first group of interaction components is ceased at a first moment of the live streaming interaction event, where the first group of interaction components corresponds to a first group of live streaming rooms in the live streaming room, the first group of live streaming rooms are determined based on the interaction information of the plurality of live streaming rooms at the first moment, and a number of the first group of live streaming rooms is less than a number of the plurality of live streaming rooms.

In a second aspect of the present disclosure, an apparatus for live streaming interaction is provided. The apparatus includes: an area display module configured to display, in response to a live streaming interaction event associated with a plurality of live streaming rooms, a plurality of display areas corresponding to the plurality of live streaming rooms in a live streaming interface; a component display module configured to display a plurality of interaction components corresponding to the plurality of live streaming rooms in association with the plurality of display areas, wherein an interaction component at least indicates interaction information of a corresponding live streaming room, and the interaction information is determined based on an interaction operation associated with the corresponding live streaming room; and a style adjustment module configured to control that an update of interaction information indicated by a first group of interaction components is ceased at a first moment of the live streaming interaction event, where the first group of interaction components correspond to a first group of live streaming rooms in the live streaming room, the first group of live streaming rooms are determined based on the interaction information of the plurality of live streaming rooms at the first moment, and a number of the first group of live streaming rooms is less than a number of the plurality of live streaming rooms.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIGS. 2A-2F illustrate example interfaces for live streaming interaction according to some embodiments of the present disclosure;
FIG. 3 illustrates a flowchart of an example process of live streaming interaction according to some embodiments of the present disclosure;
FIG. 4 illustrates a schematic structural block diagram of an apparatus for live streaming interaction according to some embodiments of the present disclosure; and
FIG. 5 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout, and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood to mean an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and/or use of data, and the like. These aspects all follow the corresponding laws and regulations and related provisions. In the embodiments of the present disclosure, all data collection, acquisition, treatment, processing, forwarding, use, and the like are performed on the premise that the user knows and confirms. Accordingly, when implementing the embodiments of the present disclosure, the type, the usage scope, the usage scenario, and the like of data or information that may be involved should be notified to the user and obtain the authorization from the user in an appropriate manner according to the relevant laws and regulations. The specific notification and/or authorization manner may vary according to actual situations and application scenarios, and the scope of the present disclosure is not limited in this regard.

According to the solutions in the present specification and the embodiments, for example, personal information processing is involved, processing may be performed on the premise of having a legal basis (for example, obtaining consent of a personal information subject, or necessary for performing a fulfillment contract), and processing may be performed only within a specified or agreed range. In the case that the user refuses personal information other than necessary information required by the basic function, the use of the basic function by the user will not be affected.

As mentioned briefly above, in the form of live streaming, a strong sense of presence may be created through real and vivid propagation, and an impressive and lasting interaction effect is achieved. In addition, the form of live streaming may allow users to interact with each other in real time.

In a related solution, in order to improve interaction and viewing experience, live streaming content is enriched. Providers (or live streamers) of live streaming content may be linked during the live streaming. For example, live streamers may interact by integrating content of live streaming rooms to provide richer live streaming content for viewers. However, such a solution has problems such as a weak interaction atmosphere and a poor user viewing experience.

Embodiments of the present disclosure provide a solution of live streaming interaction. According to the solution, in response to a live streaming interaction event associated with a plurality of live streaming rooms, a plurality of display areas corresponding to the plurality of live streaming rooms are displayed in a live streaming interface; a plurality of interaction components corresponding to the plurality of live streaming rooms are displayed in association with the plurality of display areas, wherein an interaction component at least indicates interaction information of a corresponding live streaming room, and the interaction information is determined based on an interaction operation associated with the corresponding live streaming room; and at a first moment of the live streaming interaction event, an update of interaction information indicated by a first group of interaction components is controlled to be creased. The first group of interaction components correspond to a first group of live streaming rooms in the live streaming room, the first group of live streaming rooms are determined based on the interaction information of the plurality of live streaming rooms at the first moment, and a number of the first group of live streaming rooms is less than a number of the plurality of live streaming rooms.

In this way, the embodiments of the present disclosure can adaptively adjust a display style of the interaction component based on an interaction condition within the live streaming room, so as to enhance the interaction atmosphere and improve the interaction experience of the live streaming room.

Various example implementations of this solution are described in detail below in conjunction with the accompanying drawings.

### Example Environment

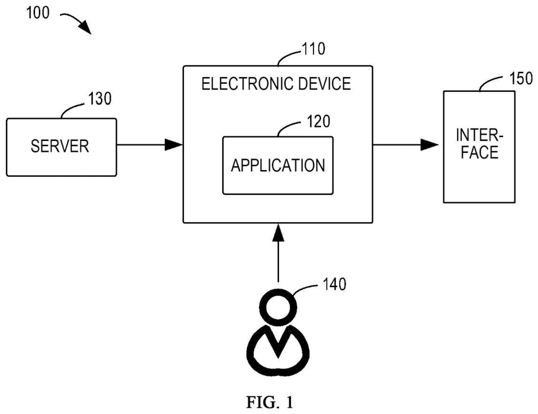

FIG. 1 illustrates a schematic diagram of an example environment 100 in which embodiments of the present disclosure may be implemented. As shown in FIG. 1, the example environment 100 may include an electronic device 110.

In this example environment 100, the electronic device 110 may be run an application 120 for providing and viewing live streaming. The application 120 may be any suitable type of application for providing and viewing live streaming, examples of which may include, but are not limited to: online video applications, and live streaming applications. A user 140 may interact with the application 120 via the electronic device 110 and/or its attachment device(s). The user 140 may include an appropriate user of the live streaming room, such as a live streamer, a viewer, or the like.

In the environment 100 of FIG. 1, if the application 120 is in an active state, the electronic device 110 may present a live streaming interface 150 through the application 120.

In some embodiments, the electronic device 110 communicates with a server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 110 may also support any type of interface for a user (such as a "wearable" circuit, etc.).

The server 130 may be a standalone physical server, a distributed system or a server cluster composed of multiple physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide background services for the applications 120 that support virtual scenes in the electronic device 110.

A communication connection may be established between the server 130 and the electronic device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this regard. In an embodiment of the present disclosure, the server 130 and the electronic device 110 may implement signaling interaction through a communication connection between the server 130 and the electronic device 110.

It should be understood that the structures and functions of various elements in the environment 100 are described for illustrative purposes only and do not imply any limitation to the scope of the present disclosure.

Some example embodiments of the present disclosure will be described below with continued reference to the accompanying drawings.

### Example Live Streaming Interaction

The electronic device 110 may provide a live streaming interface of the live streaming room for the user 140. For example, the electronic device 110 may provide a live streaming interface of a first live streaming room for a user 140 according to the first live streaming room selected by the user 140. The user 140 may obtain, through the live streaming interface, live streaming content that is provided by a live streamer and related to the first live streaming room.

In an embodiment of the present disclosure, the electronic device 110 displays, in response to a live streaming interaction event associated with a plurality of live streaming rooms, live streaming content of the plurality of live streaming rooms in a live streaming interface of the first live streaming room. The live streaming interaction event herein may be, for example, a competition interaction event indicating that different live streaming rooms correspond to different interaction targets. For example, the competition interaction event may include competition interaction (in some scenarios, also referred to as PK) between the first live streaming room and at least one other live streaming room based on a certain standard and within a time period, and after the competition interaction is completed, the winning live streaming room is determined based on the interaction information of respective live streaming rooms, and rewards are provided.

The interaction information of respective live streaming rooms herein may be determined based on an interaction operation associated with a corresponding live streaming room. The interaction operation associated with the corresponding live streaming room may include an appropriate interaction operation occurring in the live streaming room or may include an appropriate interaction operation of views of other live streaming rooms with respect to the live streaming room. For example, the interaction operation associated with a specific live streaming room may include operations such as gift-giving, liking, forwarding, commenting, favoriting and the like in the live streaming room, and may also include operations such as gift-giving, liking, favoriting and the like initiated by users of other live streaming rooms for the live streaming room via a live streaming interface of their respective live streaming rooms.

In some embodiments, the interaction information of the live streaming room is configured to represent an accumulation of interaction operations associated with corresponding live streaming rooms in the live streaming interaction event. The interaction information herein may include, for example, an interaction value. The interaction value herein may be, for example, a value of points during a competition. For example, for the first live streaming room, the corresponding value of points may be, for example, a total value of points accumulated from props provided by a group of users viewing the live streaming room in the first live streaming room.

In some embodiments, the live streamer of the first live streaming room may establish and implement an interaction of "cross-live streaming room" by, for example, inviting a live steamer of at least one other live streaming room, or by receiving an invitation from a live streamer of other live streaming room. For example, when the live streamer establishes the interaction across the live streaming room with the at least one other live streamer, live streaming content of the first live streaming room and live streaming content of the at least one other live streaming room may be presented in the live streaming interface viewed by the user 140. In this case, the live streamer and the viewer in the first live streaming room may interact with a live streamer and a viewer in the at least one other live streaming room to enrich the interaction experience.

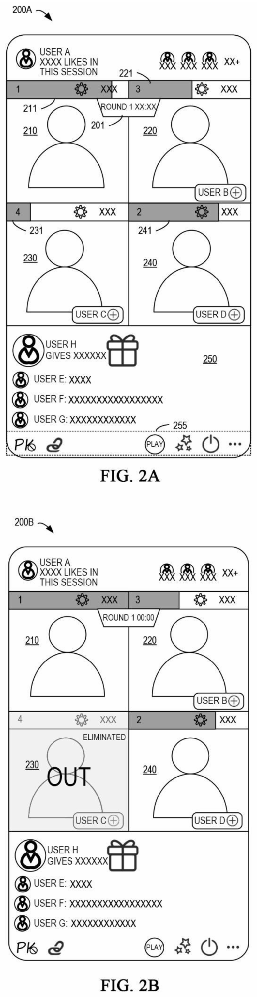

Referring to FIG. 2A for convenience, FIG. 2A illustrates an example interface 200A of some embodiments of the present disclosure. The interface 200A may be provided to the user 140. As shown in FIG. 2A, the interface 200A corresponds to a live streaming room interface corresponding to a user A, and in this case, the live streaming room corresponding to the user A is the first live streaming room.

The electronic device 110 displays, in response to a live streaming interaction event associated with a plurality of live streaming rooms, a plurality of display areas (including a display area 210, a display area 220, a display area 230, and a display area 240) corresponding to the plurality of live streaming rooms in a live streaming interface of the first live streaming room. It should be noted that the number of the plurality of display areas herein is merely an example, and the electronic device 110 may display more or fewer number of display areas.

Four display areas (i.e., four corresponding live streaming rooms) herein are merely illustrative descriptions, and the present disclosure does not limit the specific number of the plurality of live streaming rooms participating in the live streaming interaction. In some embodiments, the number of live streaming rooms participating in the live streaming interaction event may also be configured by a user who initiates the live streaming interaction event. For example, when initiating a multi-live streaming room PK event, the live streamer may configure the number of live streaming rooms that may participate in the PK event. In some embodiments, the number of live streaming rooms participating in the PK event is, for example, greater than 2.

In some embodiments, the electronic device 110 may further determine the number of display areas corresponding to the live streaming interaction based on the specific interaction content corresponding to the live streaming interaction event. In some embodiments, the electronic device 110 may default to presenting live streaming content of the first live streaming room (that is, live streaming content of a live streaming room of the user A) in a first display area, that is, the display area 210. The electronic device 110 may, for example, present other live streamers in other remaining display areas in sequence based on an order in which the other live streamers join the live streaming interaction. For example, in response to a user B joining the live streaming interaction first, the electronic device 110 may present live streaming content of a live streaming room of the user B in the display area 220; and in response to a user C joining the live streaming interaction second, the electronic device 110 may present live streaming content of a live streaming room of the user C in the display area 230, etc.

In some embodiments, before the live streaming interaction event officially starts (for example, the live streaming PK officially starts), the electronic device 110 may further present, in response to the number of live streamers joining the live streaming interaction, a corresponding number of display areas for them. For example, when the live streaming interaction includes 3 live streamers (e.g., the user A, the user B, and the user C), the electronic device 110 may display 3 display areas. The electronic device 110 may present a 4th display area in response to a user D joining the live streaming interaction.

In an interface 200A, the display area 210, the display area 220, the display area 230, and the display area 240 may respectively present live streaming content in different live streaming rooms. Thus, the electronic device 110 may provide live steaming content of four live streaming rooms for the user 140 at the same time. Further, the electronic device 110 may provide an interaction area 250 in a live streaming interface (e.g., the interface 200A). The user 140 may use the interaction area 250 to implement interaction with the live streaming room. For example, text communication may be performed with other users in the live streaming room. Generally, the interaction area 250 corresponds to a live streaming room that the user 140 currently enters. For example, taking the first live streaming room being a live streaming room of the user A as an example, text content presented in the interaction area 250 is, for example, comment content for the first live streaming room, that is sent by other users reviewing the live streaming room of the user A. The electronic device 110 may also present an interaction effect in the interaction area. For example, in response to a user H performing a gift-giving interaction on the first live streaming room, the electronic device 110 may present corresponding gift-giving effect and text description in the interaction area 250. The electronic device 110 may further provide a group of controls 255 in the interaction area 250, and the user 140 may complete operations such as issuing a comment, giving a prop to the live streamer, and the like through respective controls in the group of controls 255.

In some embodiments, the electronic device 110 may further be associated with a plurality of display areas to display a plurality of interaction components corresponding to the plurality of live streaming rooms. The plurality of interaction components may at least indicate interaction information of the corresponding live streaming room. In some embodiments, the interaction component may include, for example, a progress control (for example, a progress bar). For example, the interaction component associated with the display area 210 may include a progress bar 211, the interaction component associated with the display area 220 may include a progress bar 221, the interaction component associated with the display area 230 may include a progress bar 231, and the interaction component associated with the display area 240 may include a progress bar 241. The progress bars associated with different display areas may indicate an interaction situation of a live streaming room corresponding to the display area, and further indicate specific interaction information of the corresponding live streaming room. It may be understood that the longer the length of the progress bar is, the higher the interaction information of the corresponding live streaming room is.

In some embodiments, the interaction component may further include, for example, a point display component. For example, as shown in FIG. 2A, the electronic device 110 may present, at a point display control, a total value of points accumulated from props provided by users viewing respective live streaming rooms in the corresponding live streaming room. For example, the electronic device 110 may present total values of points "XXX" of corresponding plurality of live streaming rooms at the upper right corner of each display area. It may be understood that the longer the progress bar, the higher the value of points corresponding to the live streaming room. In some embodiments, the interaction component may further include, for example, a ranking component. For example, as shown in FIG. 2A, the electronic device 110 may present, at the upper left corner of each display area, a ranking of the corresponding live streaming room in the live streaming interaction event. The ranking here may be determined based on the value of points, for example. That is, the larger the value of points, the higher the corresponding ranking. For example, the ranking of the live streaming room corresponding to the user B in the live streaming interaction event is 3, and the ranking of the live streaming room corresponding to the user D in the live streaming interaction event is 2. It may be understood that the interaction component may further include any other suitable control, which is not limited in the present disclosure.

In some embodiments, in order to improve the user experience of the user participating in the live streaming interaction event, the electronic device 110 may determine at least one time node included in the live streaming interaction event. For example, the at least one time node herein may be determined based on configuration information corresponding to the live streaming interaction event.

For example, if the live streaming interaction event is pre-configured as an interaction activity including a plurality of stages (for example, an interaction activity with multiple rounds), the electronic device 110 may determine a moment at which each stage of the interaction activity ends as a corresponding time node.

In some embodiments, the at least one time node in the live streaming interaction event may further be determined by the electronic device 110 based on a predetermined duration of the live streaming interaction event. For example, if the electronic device 110 determines that the predetermined duration of the live streaming interaction event is 10 minutes in advance, the electronic device 110 determines the fifth minute after the start of the live streaming interaction event as a time node. In some embodiments, the electronic device 110 may further determine a moment at which the live streaming interaction event ends as a time node. In this way, a plurality of stages included in the live streaming interaction event may be determined by determining at least one time node. In the embodiments of the present disclosure, the interaction atmosphere between multiple live streaming rooms and the users viewing the live streaming room may be enhanced by "eliminating" the live streaming room in stages, and the interaction experience of the live streaming room is improved.

In some embodiments, the electronic device 110 may further display countdown information about a first moment in the interface 200A within a time period before the first moment (any one of the at least one time node). The time period before the first moment may include, for example, a time period between the first moment and a time node previous to the first moment. For example, if the first moment is a second time node of the live streaming interaction event, the time period before the first moment is a time period between the first time node and the second time node. The time period before the first moment may also include, for example, a time period between the first moment and a moment at which the live streaming interaction event starts. In some embodiments, the electronic device 110 may display the countdown information about the first moment by displaying a prompt control 201 in the interface 200A. For example, "XX:XX" displayed by the electronic device 110 in the prompt control 201 is countdown information about the first moment. In some embodiments, the electronic device 110 may further display prompt information about the current time node in the prompt control 201. For example, the "Round 1" displayed by the electronic device 110 in the prompt control 201 may indicate that prompt information for the first time node of the live streaming interaction event is currently displayed. That is, the associated first moment is the first time node of the live streaming interaction event. The first time node herein may correspond to, for example, a moment at which an interaction activity of the first stage in the live streaming interaction event ends.

In some embodiments, in order to reminder the user in time to inform the user that the first moment is approaching, the electronic device 110 may display a prompt element in a first period before the first moment in association with a target display area and/or a target interaction component corresponding to a target live streaming room. If the time period between the first moment and the time node previous to the first moment (or a start moment of the live streaming interaction event) is referred to as a second time period, it may be understood that the first time period is less than the second time period. For example, if the first moment is the first time node, that is, the moment at which the interaction activity of the first stage ends, the second time period is a time period (for example, 3 minutes) corresponding to the interaction activity of the first stage, and the first time period is a part of time period (for example, 10 seconds) at which an end point of the second time period is the first moment. The target live streaming room is at least one live streaming room determined based on the interaction information of the plurality of live streaming rooms in the first time period. The target live streaming room may be, for example, at least one live streaming room with the lowest interaction degree participating in the live streaming interaction event. For example, the target live streaming room may be a live streaming room of the user C with the shortest progress bar in the interface 200A. The target live streaming room may also be a live streaming room of the user B and a live streaming room of the user C with shorter progress bars in the interface 200A.

If the live streaming interaction event includes a live streaming PK, the electronic device 110 may determine at least one live streaming room with the lowest interaction degree. In order to prompt the related user (including the live streamer and the viewer) of the target live streaming room, the electronic device 110 may display the prompt element at the target display area and/or the target interaction component corresponding to the target live streaming room. The prompt element herein may include any suitable prompt element such as a display breathing lamp.

Further, the electronic device 110 may control that, at the first moment of the live streaming interaction event, an update of interaction information indicated by a first group of interaction components corresponding to the first group of live streaming rooms of the plurality of live streaming rooms is ceased. Specifically, the electronic device 110 may adjust a display style of the first interaction component to indicate that the interaction information indicated by the first group of interaction components are no longer updated based on the interaction operation associated with the corresponding live streaming room. The first group of live streaming rooms herein are determined based on the interaction information of the plurality of live streaming rooms at the first moment, and the number of the first group of live streaming rooms is less than the number of the plurality of live streaming rooms. That is, the first group of live streaming rooms determined herein are some of the live streaming rooms participating in the live streaming interaction event. In an example in which the live streaming interaction event is a competition event (for example, a live streaming PK event), the some live streaming rooms may also be referred to as "knocked out" or "eliminated" live streaming rooms.

As shown in FIG. 2B, the interface 200B may correspond to, for example, a live streaming interface provided by the electronic device 110 at the first moment of the live streaming interaction event. In response to reaching the first moment, the electronic device 110 may, for example, determine a live streaming room with the shortest progress bar/the fewest points/the last rank (the live streaming room of the user C), and cease displaying of the progress bar corresponding to the live streaming room. The electronic device 110 may fix the value of points and the ranking corresponding to the live streaming room of the user C. In some embodiments, the electronic device 110 may also present text "out" in the display area 230 to instruct the electronic device 110 to cease continuously presenting of the live streaming room content corresponding to the user C in the display area 230.

In some embodiments, at the first moment of the live streaming interaction event, the electronic device 110 may further adjust the display style of the first display area corresponding to the first group of live streaming rooms. As shown in FIG. 2B, if the live streaming room of the user C is a live streaming room included in the first group of live streaming rooms, the electronic device 110 may adjust the display style of the display area 230 in the interface 200B. For example, the electronic device 110 may adjust the display style of the display area 230 by adjusting brightness, size, position of the display area 230, adding a mask in the display area 230, adding a border, adding text, or the like.

In some embodiments, at the first moment of the live streaming interaction event, the electronic device 110 may further adjust a display style of a second group of display areas corresponding to a second group of live streaming rooms of the plurality of live streaming rooms other than the first group of live streaming rooms. For example, if the first group of live streaming rooms are those in which it is determined that an update of interaction information is ceased at the first moment, interaction information indicated by the second group of interaction components corresponding to the second group of live streaming rooms may continue to be updated based on the interaction operation associated with the corresponding live streaming room. As shown in FIG. 2B, if the live streaming room of the user C is a live streaming room included in the first group of live streaming rooms, the electronic device 110 may adjust a display style of other display areas (e.g., the display area 210, the display area 220, and the display area 240) other than the display area 230 in the interface 200B. It may be understood that the electronic device 110 may adjust the display style of the display area in any suitable manner, which is not limited in the present disclosure.

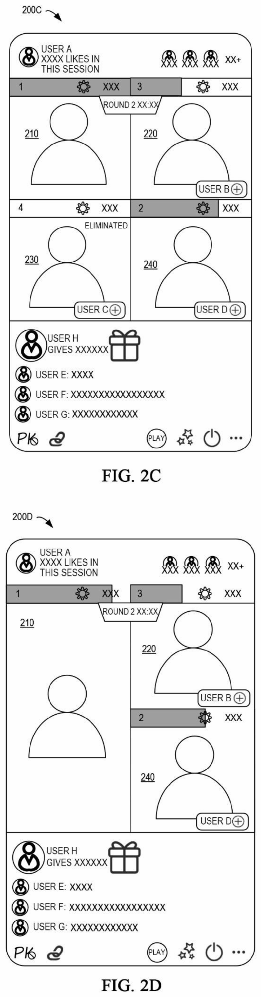

In response to the live streaming interaction event being still continued, in some embodiments, the electronic device 110 may present the live streaming interface 200C as shown in FIG. 2C. As shown in FIG. 2C, in response to the live streaming room of the user C being previously determined as a live streaming room included in the first group of live streaming rooms, the electronic device 110 may present text "out" in the display area 230 and empty the progress bar associated with the live streaming room of the user C to indicate that the interaction information of the live streaming room of the user C is not updated based on the interaction operation associated with the live streaming room of the user C. The electronic device 110 will next update only the interaction information of other three live streams participating in the live streaming interaction event. If the live streaming interaction event is a live streaming PK event, the situation may also be understood as that the live streaming room of the user C has been eliminated, and then the PK will continue to be performed by the other three live streaming rooms. In some embodiments, the electronic device 110 may reset the progress bar, the value of points, and the ranking corresponding to the other three live streaming rooms to indicate the start of a new state of the live streaming PK. Alternatively or additionally, the electronic device 110 may continue to display the previous progress bar, the value of points, and the ranking, that is, the electronic device 110 does not reset the interaction information, and the new stage of the live streaming PK will be affected by a result of the live streaming PK in the previous stage. In some embodiments, in response to the live streaming interaction event still being continued, the electronic device 110 may further adjust a layout of the display area corresponding to the plurality of live streaming rooms in the live streaming interface. For example, the electronic device 110 may exchange a position of the display area 230 with a position of the display area 240, so that the display area 230 is located at a back position in the live streaming interface.

Given that there are situations where the streamers of the live streaming rooms with the update of the interaction information being ceased select to exit the live streaming interaction event, in some embodiments, the electronic device 110 may also present the live streaming interface 200D shown in FIG. 2D. For example, in response to that the live streaming room of the user C has ceased the update of the interaction information in the current live streaming interaction event, and the user C selects to exit the current live streaming interaction event, the electronic device 110 may adjust the layout of the display areas corresponding to the remaining plurality of live streaming rooms in the live streaming interface. As shown in FIG. 2D, the electronic device 110 may cease displaying the display area 230 and adjust positions of the remaining three display areas in the live streaming interface to ensure the aesthetics of the live streaming interface.

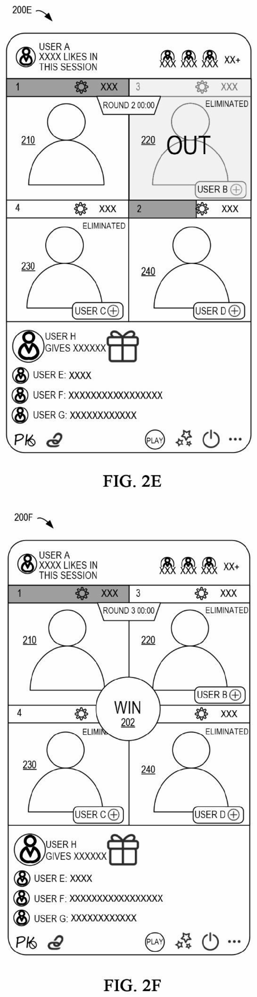

If the interaction activity of the current stage is not the interaction activity of the last stage of the live streaming interaction event, the electronic device 110 may adjust a display style of the second group of interaction components corresponding to a third group of live streaming rooms in the second group of live streaming rooms to indicate that interaction information indicated by the third group of interaction components is no longer updated based on the interaction operation associated with the corresponding live streaming room, similar to the first moment. The third group of live streaming rooms herein is determined based on the interaction information of the second group of live streaming rooms at the second moment, and the number of the third group of live streaming rooms is less than the number of the second group of live streaming rooms. That is, the third group of live streaming rooms determined herein are some of the live streaming rooms in the second group of live streaming rooms participating in the live streaming interaction event. As shown in FIG. 2E, the interface 200E may correspond to a live streaming interface provided by the electronic device 110 at the second moment of the live streaming interaction event, for example. In response to reaching the second moment, the electronic device 110 may, for example, cease displaying the progress bar corresponding to a live streaming room with the shortest progress bar/the fewest points/the last rank in the current stage. For example, the electronic device 110 may cease displaying live streaming room content of the live streaming room of the user B in the display area 220. The electronic device 110 may fix the value of points and the ranking corresponding to the live streaming room corresponding to the user B. In some embodiments, the electronic device 110 may further present text "out" in the display area 220 to instruct the electronic device 110 to cease presenting live streaming room content corresponding to the user B in the display area 220.

In response to the live streaming interaction event being still continued, in some embodiments, the electronic device 110 may present a live streaming interface including a plurality of display areas. In some embodiments, if the interaction activity of the current stage is an interaction activity of the last stage of the live streaming interaction event, the electronic device 110 may present a final result of the live streaming interaction event at a third moment associated with the interaction activity of the current stage (for example, a moment at which the interaction activity of the current stage ends, or a moment at which the live streaming interaction event ends). For example, if the current live streaming interaction event is a competition event associated with a plurality of live streaming rooms (for example, a live streaming PK which needs to determine a final PK winner), the electronic device 110 may, in response to the first live streaming room being determined as a winning party of the competition event based on the corresponding interaction information, present a second prompt element in the live streaming interface at the third moment of the live streaming interaction event. For example, as shown in FIG. 2F, in an example of the live streaming room of the user A and the live streaming room of the user D perform live streaming PK in the last stage, and the live streaming room of the user A is the first live streaming room, the electronic device 110 may determine, if the live streaming room of the user A has the highest value of points/ the longest progress bar/the 1^{st} ranking at the third moment, the live streaming room of the user A as the final winning party of the live streaming PK. The electronic device 110 may present, in the live streaming interface of the first live streaming room (that is, the live streaming room of the user A), a prompt element configured to indicate that the first live streaming room wins. The prompt element herein may be, for example, an element in any form such as a halo or fireworks. In some embodiments, the electronic device 110 may prompt the user A to be the final winner of the current live streaming PK, for example, by presenting the prompt element 202 in the live streaming room interface of the live streaming room of the user A.

It should be understood that the live streaming interfaces of FIG. 2A to FIG. 2F are merely example interfaces, and various interface designs may actually exist. Individual graphical elements, textual elements, etc. in the interface may have different arrangements and different visual representations, one or more of which may be omitted or replaced, and one or more other elements may also be present. Embodiments of the present disclosure are not limited in this regard.

In summary, the embodiments of the present disclosure can adaptively adjust the display style of the interaction component based on the interaction condition in the live streaming room to enhance the interaction atmosphere and improve the interaction experience of the live streaming room.

### Example Process

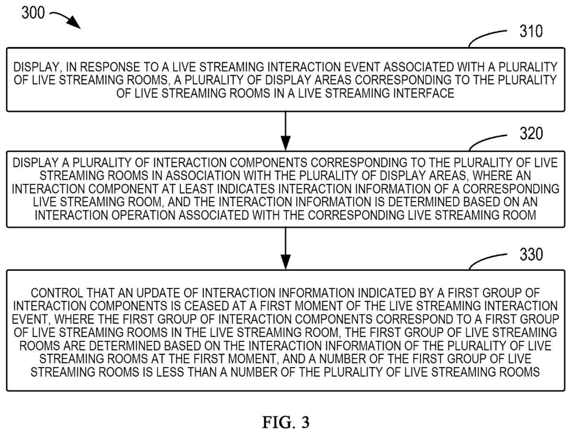

FIG. 3 illustrates a flowchart of an example process 300 of live streaming interaction according to some embodiments of the present disclosure. The process 300 may be implemented at the electronic device 110. The process 300 is described below with reference to FIG. 1.

As shown in FIG. 3, at block 310, the electronic device 110 displays, in response to a live streaming interaction event associated with a plurality of live streaming rooms, a plurality of display areas corresponding to the plurality of live streaming rooms in a live streaming interface.

At block 320, the electronic device 110 displays a plurality of interaction components corresponding to the plurality of live streaming rooms in association with the plurality of display areas. An interaction component at least indicates interaction information of a corresponding live streaming room, and the interaction information is determined based on an interaction operation associated with the corresponding live streaming room.

At block 330, the electronic device 110 controls that an update of interaction information indicated by a first group of interaction components is ceased at a first moment of the live streaming interaction event. The first group of interaction components correspond to a first group of live streaming rooms in the live streaming room, the first group of live streaming rooms are determined based on the interaction information of the plurality of live streaming rooms at the first moment, and a number of the first group of live streaming rooms is less than a number of the plurality of live streaming rooms.

In some embodiments, the process 300 further includes: adjusting a display style of the first group of interaction components to indicate that the interaction information indicated by the first group of interaction components is no longer updated based on the interaction operation associated with the corresponding live streaming room.

In some embodiments, a second group of live streaming rooms are live streaming rooms of the plurality of live streaming rooms other than the first group of live streaming rooms, and the process 300 further includes: adjusting a display style of a second group of interaction components corresponding to a third group of live streaming rooms in the second group of live streaming rooms at a second moment of the live streaming interaction event, to indicate that interaction information indicated by a third group of interaction components is no longer updated based on the interaction operation associated with the corresponding live streaming room. The third group of live streaming rooms are determined based on interaction information of the second group of live streaming rooms at the second moment, and a number of the third group of live streaming rooms is less than a number of the second group of live streaming rooms.

In some embodiments, the process 300 further includes: adjusting a display style of a first group of display areas corresponding to the first group of live streaming rooms; and/or adjusting a display style of a second group of display areas, the second group of display areas corresponding to a second group of live streaming rooms of the plurality of live streaming rooms other than the first group of live streaming rooms.

In some embodiments, the process 300 further includes: adjusting a layout of the plurality of display areas in the live streaming interface.

In some embodiments, the first group of live streaming rooms includes a second live streaming room, and adjusting the layout of the plurality of display areas in the live streaming interface includes: adjusting, in response to the second live streaming room exiting the live streaming interaction event, the layout of the plurality of display areas in the live streaming interface, to cease presentation of a display area corresponding to the second live streaming room.

In some embodiments, the process 300 further includes: displaying a first prompt element in association with a target display area and/or a target interaction component corresponding to a target live streaming room, in a first time period before the first moment. The target live streaming room is determined based on the interaction information of the plurality of live streaming rooms in the first time period.

In some embodiments, the live streaming interface corresponds to a first live streaming room of the plurality of live streaming rooms, and displaying the first prompt element in association with the target display area and/or the target interaction component corresponding to the target live streaming room includes: displaying, in response to the first live streaming room being a target live streaming room determined based on the interaction information of the plurality of live streaming rooms in the first time period, the first prompt element in association with the target display area and/or the target interaction component corresponding to the first live streaming room.

In some embodiments, the process 300 further includes: displaying countdown information about the first moment in the live streaming interface in a second time period before the first moment.

In some embodiments, the first moment includes a moment determined based on configuration information corresponding to the live streaming interaction event.

In some embodiments, the live streaming interface corresponds to a first live streaming room of the plurality of live streaming rooms, the live streaming interaction event includes a competition event associated with the plurality of live streaming rooms, and the process 300 further includes: presenting, in response to the first live streaming room being determined as a winning party of the competition event based on corresponding interaction information, a second prompt element in the live streaming interface at a third moment of the live streaming interaction event.

### Example Apparatus and Device

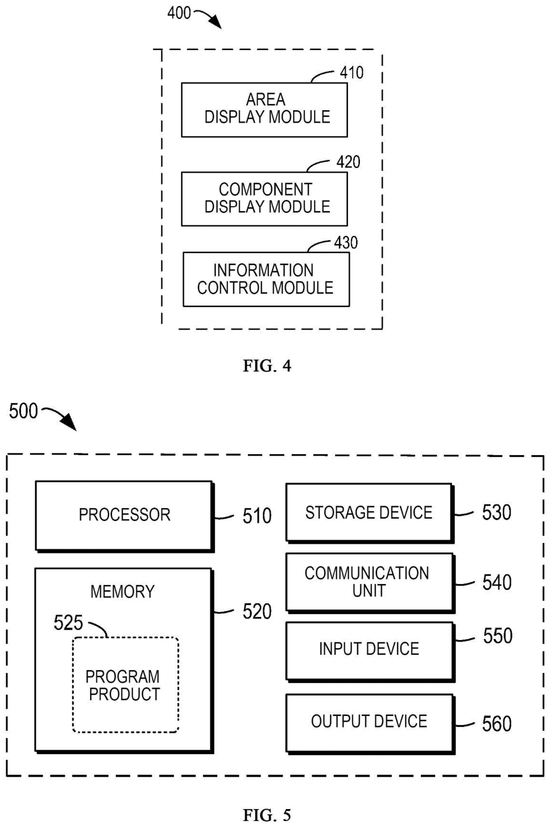

Embodiments of the present disclosure also provide a corresponding apparatus for implementing the above method or process. FIG. 4 illustrates a schematic structural block diagram of an apparatus 400 for live streaming interaction according to some embodiments of the present disclosure. The apparatus 400 may be implemented or included in the electronic device 110. The various modules/components in the apparatus 400 may be implemented by hardware, software, firmware, or any combination thereof.

As shown in FIG. 4, the apparatus 400 includes an area display module 410 configured to display, in response to a live streaming interaction event associated with a plurality of live streaming rooms, a plurality of display areas corresponding to the plurality of live streaming rooms in a live streaming interface. The apparatus 400 further includes a component display module 420 configured to display a plurality of interaction components corresponding to the plurality of live streaming rooms in association with the plurality of display areas. An interaction component at least indicates interaction information of a corresponding live streaming room, and the interaction information is determined based on an interaction operation associated with the corresponding live streaming room. The apparatus 400 further includes an information control module 430 configured to control that an update of interaction information indicated by a first group of interaction components is ceased at a first moment of the live streaming interaction event. The first group of interaction components correspond to a first group of live streaming rooms in the live streaming room, the first group of live streaming rooms are determined based on the interaction information of the plurality of live streaming rooms at the first moment, and a number of the first group of live streaming rooms is less than a number of the plurality of live streaming rooms.

In some embodiments, the apparatus 400 further includes a style adjustment module configured to adjust a display style of the first group of interaction components to indicate that the interaction information indicated by the first group of interaction components is no longer updated based on the interaction operation associated with the corresponding live streaming room.

In some embodiments, a second group of live streaming rooms are live streaming rooms of the plurality of live streaming rooms other than the first group of live streaming rooms, and the apparatus 400 further includes: a second style adjustment module configured to adjust a display style of a second group of interaction components corresponding to a third group of live streaming rooms in the second group of live streaming rooms at a second moment of the live streaming interaction event, to indicate that the interaction information indicated by a third group of interaction components is no longer updated based on the interaction operation associated with the corresponding live streaming room. The third group of live streaming rooms are determined based on interaction information of the second group of live streaming rooms at the second moment, and a number of the third group of live streaming rooms is less than a number of the second group of live streaming rooms.

In some embodiments, the apparatus 400 further includes: a first adjustment module configured to adjust a display style of a first group of display areas corresponding to the first group of live streaming rooms; and/or a second adjustment module configured to adjust a display style of a second group of display areas, the second group of display areas corresponding to a second group of live streaming rooms of the plurality of live streaming rooms other than the first group of live streaming rooms.

In some embodiments, the apparatus 400 further includes: a layout adjustment module configured to adjust a layout of the plurality of display areas in the live streaming interface.

In some embodiments, the first group of live streaming rooms includes a second live streaming room, and the layout adjustment module includes: a ceasing presentation module configured to adjust, in response to the second live streaming room exiting the live streaming interaction event, the layout of the plurality of display areas in the live streaming interface, to cease presentation of a display area corresponding to the second live streaming room.

In some embodiments, the apparatus 400 further includes: an element display module configured to display a first prompt element in association with a target display area and/or a target interaction component corresponding to a target live streaming room in a first time period before the first moment. The target live streaming room is determined based on the interaction information of the plurality of live streaming rooms in the first time period.

In some embodiments, the live streaming interface corresponds to a first live streaming room of the plurality of live streaming rooms, and the element display module is further configured to display, in response to the first live streaming room being a target live streaming room determined based on the interaction information of the plurality of live streaming rooms in the first time period, the first prompt element in association with the target display area and/or the target interaction component corresponding to the first live streaming room.

In some embodiments, the apparatus 400 further includes: a countdown display module configured to display countdown information about the first moment in the live streaming interface in a second time period before the first moment.

In some embodiments, the first moment includes a moment determined based on configuration information corresponding to the live streaming interaction event.

In some embodiments, the live streaming interface corresponds to a first live streaming room of the plurality of live streaming rooms, the live streaming interaction event includes a competition event associated with the plurality of live streaming rooms, and the apparatus 400 further includes: an element presentation module configured to present, in response to the first live streaming room being determined as a winning party of the competition event based on corresponding interaction information, a second prompt element in the live streaming interface at a third moment of the live streaming interaction event.

The units included in the apparatus 400 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 400 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the electronic device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multiprocessor system, a plurality of processing units execute computer-executable instructions in parallel to improve the parallel processing capability of the electronic device 500.

The electronic device 500 generally includes a plurality of computer storage media. Such media may be any available media accessible by the electronic device 500, including, but not limited to, volatile and non-volatile media, removable and non-removable media. The memory 520 may be a volatile memory (e.g., a register, a cache, a random access memory (RAM)), a non-volatile memory (e.g., a read-only memory (ROM), electrically erasable programmable read-only memory (EEPROM), a flash memory), or some combination thereof. The storage device 530 may be a removable or non-removable medium and may include a machinereadable medium, such as a flash drive, magnetic disk, or any other medium, which may be capable of storing information and/or data and may be accessed within the electronic device 500.

The electronic device 500 may further include additional removable/non-removable, volatile/non-volatile storage media. Although not shown in FIG. 5, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 is configured to communicate with another electronic device through a communication medium. Additionally, the functionality of components of the electronic device 500 may be implemented in a single computing cluster or multiple computing machines capable of communicating through a communication connection. Thus, the electronic device 500 may operate in a networked environment using logical connections with one or more other servers, a network personal computer (PC), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, the external device such as a storage device, a display device, etc., communicates with one or more devices that enable the user to interact with the electronic device 500, or communicates with any device (e.g., a network card, a modem, etc.) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon. The computer-executable instructions are executed by a processor to implement the method described above. According to example implementations of the present disclosure, a computer program product is further provided. The computer program product is tangibly stored on a non-transitory computer-readable medium and includes computer-executable instructions. The computer-executable instructions is executed by a processor to implement the method described above.

Aspects of the disclosure are described herein with reference to flowcharts and/or block diagrams of a method, an apparatus, a device, and a computer program product implemented in accordance with the disclosure. It should be understood that each block of the flowchart and/or block diagram, and combinations of blocks in the flowchart(s) and/or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in one or more blocks in the flowchart(s) and/or block diagram(s). These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in one or more blocks in the flowchart(s) and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other apparatus implement the functions/acts specified in one or more blocks in the flowchart(s) and/or block diagram(s).

The flowchart and block diagrams in the figures show an architecture, functionality, and operation that may be possibly implemented by a system, a method, and a computer program product according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and/or flowchart(s), as well as combinations of blocks in the block diagram(s) and/or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming interaction, comprising:
displaying, in response to a live streaming interaction event associated with a plurality of live streaming rooms, a plurality of display areas corresponding to the plurality of live streaming rooms in a live streaming interface;
displaying a plurality of interaction components corresponding to the plurality of live streaming rooms in association with the plurality of display areas, wherein an interaction component at least indicates interaction information of a corresponding live streaming room, and the interaction information is determined based on an interaction operation associated with the corresponding live streaming room; and
controlling that an update of interaction information indicated by a first group of interaction components is ceased at a first moment of the live streaming interaction event, wherein the first group of interaction components correspond to a first group of live streaming rooms in the live streaming rooms, the first group of live streaming rooms are determined based on the interaction information of the plurality of live streaming rooms at the first moment, and a number of the first group of live streaming rooms is less than a number of the plurality of live streaming rooms.

2. The method of claim 1, further comprising:
adjusting a display style of the first group of interaction components to indicate that the interaction information indicated by the first group of interaction components is no longer updated based on the interaction operation associated with the corresponding live streaming room.

3. The method of claim 1, wherein a second group of live streaming rooms are live streaming rooms of the plurality of live streaming rooms other than the first group of live streaming rooms, and the method further comprises:
adjusting a display style of a second group of interaction components corresponding to a third group of live streaming rooms in the second group of live streaming rooms at a second moment of the live streaming interaction event, to indicate that interaction information indicated by a third group of interaction components is no longer updated based on the interaction operation associated with the corresponding live streaming room, wherein the third group of live streaming rooms are determined based on interaction information of the second group of live streaming rooms at the second moment, and a number of the third group of live streaming rooms is less than a number of the second group of live streaming rooms.

4. The method of claim 1, further comprising:
adjusting a display style of a first group of display areas corresponding to the first group of live streaming rooms; and/or
adjusting a display style of a second group of display areas, the second group of display areas corresponding to a second group of live streaming rooms of the plurality of live streaming rooms other than the first group of live streaming rooms.

5. The method of claim 1, further comprising:
adjusting a layout of the plurality of display areas in the live streaming interface.

6. The method of claim 5, wherein the first group of live streaming rooms comprises a second live streaming room, and adjusting the layout of the plurality of display areas in the live streaming interface comprises:
adjusting, in response to the second live streaming room exiting the live streaming interaction event, the layout of the plurality of display areas in the live streaming interface, to cease presentation of a display area corresponding to the second live streaming room.

7. The method of claim 1, wherein the live streaming interface corresponds to a first live streaming room of the plurality of live streaming rooms, the live streaming interaction event comprises a competition event associated with the plurality of live streaming rooms, and the method further comprises:
presenting, in response to the first live streaming room being determined as a winning party of the competition event based on corresponding interaction information, a first prompt element in the live streaming interface at a third moment of the live streaming interaction event.

8. The method of claim 1, further comprising:
displaying a second prompt element in association with a target display area and/or a target interaction component corresponding to a target live streaming room in a first time period before the first moment, wherein the target live streaming room is determined based on the interaction information of the plurality of live streaming rooms in the first time period.

9. The method of claim 8, wherein the live streaming interface corresponds to a first live streaming room of the plurality of live streaming rooms, and displaying the second prompt element in association with the target display area and/or the target interaction component corresponding to the target live streaming room comprises:
displaying, in response to the first live streaming room being a target live streaming room determined based on the interaction information of the plurality of live streaming rooms in the first time period, the second prompt element in association with the target display area and/or the target interaction component corresponding to the first live streaming room.

10. The method of claim 1, further comprising:
displaying countdown information about the first moment in the live streaming interface in a second time period before the first moment.

11. The method of claim 1, wherein the first moment comprises a moment determined based on configuration information corresponding to the live streaming interaction event.

12. An apparatus for live streaming interaction, comprising:
an area display module configured to display, in response to a live streaming interaction event associated with a plurality of live streaming rooms, a plurality of display areas corresponding to the plurality of live streaming rooms in a live streaming interface;
a component display module configured to display a plurality of interaction components corresponding to the plurality of live streaming rooms in association with the plurality of display areas, wherein an interaction component at least indicates interaction information of a corresponding live streaming room, and the interaction information is determined based on an interaction operation associated with the corresponding live streaming room; and
a style adjustment module configured to control that an update of interaction information indicated by a first group of interaction components is ceased at a first moment of the live streaming interaction event, wherein the first group of interaction components correspond to a first group of live streaming rooms in the live streaming rooms, the first group of live streaming rooms are determined based on the interaction information of the plurality of live streaming rooms at the first moment, and a number of the first group of live streaming rooms is less than a number of the plurality of live streaming rooms.

13. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 11.

14. A computer-readable storage medium having a computer program stored thereon, wherein the computer program is executable by a processor to implement the method of any of claims 1 to 11.
